# DEMANDE DE BREVET EUROPEEN

(11) **EP 1 525 969 A1**
(43) Date de publication de la demande: **27.04.2005**
(21) Numéro de dépôt: 03292606.5
(22) Date de dépôt: 21.10.2003
(51) Int. Cl.: B29B 15/10, D06M 23/08, C08J 5/04, C08J 5/24

(54) **Procédé et dispositif pour le mélange, la dispersion et/ou l'homogeneisation de matière poudreuse**

(71) Demandeur: Materials Technics Holding, 1931 Luxembourg (LU)
(72) Inventeur: Lorthioir, Michel, 1254 Jussy (GE) (CH)
(74) Mandataire: Savatier, Yves

(57) **Abrégé**

L'invention concerne un nouveau procédé de mélange, dispersion et/ou homogénéisation de matière poudreuse en l'absence de réseau fibreux ou filamenteux, caractérisé en ce qu'on fait passer la matière poudreuse dans un champ électrostatique alternatif de 0,10 à 20 kV/mm, ainsi qu'un dispositif pour mettre en oeuvre ce procédé.

## Description

L'invention concerne un nouveau procédé de mélange, dispersion et/ou homogénéisation de matière poudreuse, ainsi qu'un dispositif pour mettre en oeuvre ce procédé.

Il existe de nombreux domaines industriels où l'on souhaite disposer d'une matière poudreuse dispersée (exempte d'agglomérats) et homogène. Cette matière poudreuse peut éventuellement provenir du mélange de plusieurs poudres de nature chimique et de granulométrie identiques ou différentes.

Par exemple dans le domaine du vernissage des métaux ou des alliages à l'aide de poudres thermoplastiques, on ne peut obtenir un recouvrement total exempt de pores des métaux ou des alliages de façon économique (en utilisant des quantités minimales de ces poudres) que si ces poudres sont disperses et homogènes.

Dans le domaine de la teinture à sec des textiles, il est important de disposer d'une matière poudreuse de teinture disperse et homogène. Cette matière peut être obtenue par mélange et homogénéisation d'une poudre de colorant ou de plusieurs poudres de colorants différents et éventuellement de certains additifs fonctionnels.

Les procédés et dispositifs connus de mélange, dispersion et/ou homogénéisation de matière poudreuse font en général appel à des moyens mécaniques ou électromécaniques tels que par exemple agitation de l'ensemble de la matière poudreuse par secouage, ou introduction dans la matière poudreuse de pièces mécaniques en mouvement rotation et/ou de translation tels que rotors et/ou brosses. Il peuvent également faire appel à des mélanges dans un flux gazeux (lits fluidisés). Ces procédés et dispositifs connus ne sont pas tout à fait satisfaisants, en particulier quand les diamètres des particules sont faibles, de l'ordre de ou inférieur à 1 µm. Ils présentent en effet notamment l'inconvénient de ne pas agir avec suffisamment d'énergie directement sur l'ensemble de la matière poudreuse.

La présente invention a pour but de proposer un procédé et un dispositif de mélange, dispersion et/ou homogénéisation de matière poudreuse, avantageux par rapport aux procédés et dispositifs de l'art antérieur, et pouvant complémenter l'action de ceux-ci.

WO 99/22920 décrit un procédé d'imprégnation de poudre à l'intérieur d'un réseau fibreux ou filamenteux dans lequel on place la poudre et ledit réseau de fibres ou de filaments dans un champ électrostatique dont la tension alternative est d'au moins 5 kV pendant une durée d'au moins 2 s. Ce document décrit comme électrodes deux plaques métalliques superposées et parallèles connectées aux deux pôles respectifs d'un générateur électrostatique, dont les faces respectives disposées vis-à-vis l'une de l'autre sont recouvertes d'une plaque de diélectrique, par exemple de vitrocéramique. Selon ce document, la pénétration de la poudre au sein du réseau fibreux ou filamenteux (« imprégnation ») serait due à l'action du champ électrostatique alternatif permettant l'accumulation de charges électriques à la surface des fibres ou filaments, qui ont donc tendance à se repousser mutuellement laissant ainsi de l'espace disponible pour la poudre (cf. WO 99/22920, en particulier page 12, lignes 8-31).

De façon inattendue on a découvert que l'application d'un champ électrostatique alternatif de 0,10 à 20 kV/mm à de la matière poudreuse en l'absence de réseau fibreux ou filamenteux provoque son mélange, sa dispersion et son homogénéisation.

Le but ci-dessus est atteint par l'invention telle que définie par le jeu de revendications ci-joint.

L'invention concerne un procédé de mélange, dispersion et/ou homogénéisation de matière poudreuse en l'absence de réseau fibreux ou filamenteux, caractérisé en ce qu'on fait passer la matière poudreuse dans un champ électrostatique alternatif de 0,10 à 20 kV/mm.

Le terme « mélange » a ici sa signification habituelle dans l'art : il indique par exemple qu'en partant de plusieurs poudres de nature chimique et/ou de granulométrie différente(s)on fait une seule poudre dans laquelle chacune des poudres initiales est représentée de façon statistiquement représentative dans chaque volume aussi petit qu'il soit.

Par le terme « dispersion », on entend la séparation de particules ou grains de poudres qui au départ, pour diverses raisons, présentaient entre eux une adhérence les maintenant ensemble.

Le terme « homogénéisation » a ici la signification suivante proche de sa signification habituelle dans l'art : il indique en particulier que lors d'un dépôt de cette matière poudreuse sur un substrat, la quantité de matière poudreuse par unité de volume et de surface sera pratiquement égale d'un point à l'autre de la surface ou du volume, ainsi que d'un point à l'autre des quantités déposées successivement dans le temps, l'homogénéité étant d'autant meilleure qu'elle est respectée dans des volumes ou surfaces d'autant plus petits.

Ce procédé permet d'appliquer directement in situ dans la matière poudreuse l'énergie cinétique nécessaire pour mélanger, disperser et/ou homogénéiser la matière poudreuse, apparemment par déplacement et répulsion mutuelle des particules ou grains de celle-ci.

Ce champ électrostatique alternatif est produit dans l'espace séparant deux électrodes reliées aux pôles d'un générateur alternatif. Ces électrodes sont en général isolées électriquement l'une de l'autre par un diélectrique.

L'un des pôles du générateur alternatif est la phase, l'autre est le neutre, en général raccordé à la terre pour des raisons de sécurité, notamment lorsque le générateur alternatif est haute tension.

Le bon fonctionnement du procédé exige l'application sur le matériau à imprégner d'un champ électrostatique alternatif de 0,10 à 20 kV/mm. L'exigence d'obtenir un champ électrostatique élevé pour déplacer les particules de poudre nécessite en général l'utilisation d'un générateur haute tension alternative. Ce générateur peut être constitué d'un ou plusieurs transformateurs haute tension capable d'élever la tension délivrée par un variateur de tension primaire qui peut être lui-même constitué d'un autotransformateur. Ce variateur de tension primaire a pour fonction d'ajuster la tension qui va être élevée par le transformateur afin de constituer un générateur haute tension alternative à tension variable. Une solution consiste également à utiliser des dispositifs électroniques pour réaliser tout ou partie de ce générateur haute tension. La fréquence de ce générateur haute tension peut-être variable afin d'optimiser les performances du mélange, de la dispersion et de l'homogénéisation suivant la nature et la granulométrie de la matière poudreuse. Cette fréquence pourra varier dans une plage de 1 Hertz à 1000 Hertz suivant les cas. La forme du signal électrique appliqué aux électrodes influence également le mélange, la dispersion et l'homogénéisation de la matière poudreuse. Des signaux carrés, sinusoïdaux ou triangles peuvent être employés ainsi que des signaux de formes plus complexes. En général on utilise une tension de signal sinusoïdale à 50 ou 60 Hertz afin d'utiliser un générateur haute tension économique.

Les électrodes sont constituées d'éléments fortement conducteurs pour garantir une tension équivalente en tout point de leur surface et minimiser les pertes par échauffement. Les métaux tels que par exemple le cuivre, le nickel, l'aluminium, l'argent ou l'or sont avantageusement indiqués pour cela.

Un système d'isolants, encore appelé diélectrique, recouvre en général au moins une des électrodes afin de constituer une isolation électrique permettant de limiter le courant entre les électrodes et d'éviter l'apparition d'un arc électrique constituant un court-circuit lors de l'utilisation de champ électrostatique supérieur à la rigidité diélectrique de l'air. L'emploi de matériaux isolants est source de nombreux problèmes dans la conception ou la réalisation des matériels électriques. Une des principales causes de défaillance est, en effet, la rupture de l'isolation. En effet, lorsqu'un isolant est soumis à de fortes contraintes (électrique, thermique ou mécanique) il apparaît localement des zones non neutres en surface et/ou en volume qui modifient l'état électrostatique du matériau et induisent une distribution interne de champ résiduel. L'accumulation des charges d'espaces peut-être à l'origine de la dégradation du matériau et conduire au claquage de l'isolant.

Les isolants utilisés dans le procédé doivent présenter une rigidité diélectrique élevée et une bonne tenue en terme de vieillissement. Les matériaux comme le quartz, le verre ou la céramique présentent des caractéristiques intéressantes pour constituer ce diélectrique. Ces matériaux ont la faculté d'accumuler une faible quantité de charges d'espace lorsqu'ils sont soumis à un champ électrique. Le quartz est particulièrement apprécié comme isolant diélectrique car il présente une haute rigidité diélectrique et a une bonne tenue au vieillissement.

L'épaisseur du diélectrique dépend du niveau de champ électrique appliqué sur les électrodes. Les épaisseurs de diélectrique de 1 mm à 20 mm conviennent, avec une préférence pour les épaisseurs comprises entre 2 et 5 mm.

Suivant les niveaux de champ appliqués sur le matériau, il est possible d'isoler un seul pôle d'électrode ou les deux. L'isolation maximum sera obtenue avec un isolant diélectrique sur les deux pôles d'électrodes. Pour des matières poudreuses pouvant être mélangées, dispersées et/ou homogénéisées avec un champ électrique inférieur à la tension de claquage de l'air, il est possible d'utiliser directement l'air comme isolant entre les électrodes métalliques sans diélectrique les séparant.

L'utilisation de résines fortement chargées de particules métalliques (laque d'argent par exemple) permet de réaliser directement un revêtement servant d'électrode à la surface de l'isolant diélectrique. De même l'utilisation de films métalliques recouverts d'adhésif permet d'appliquer directement l'électrode sur l'isolant diélectrique sans avoir de lame d'air entre l'électrode et le diélectrique. Une autre solution particulièrement intéressante consiste à métalliser directement l'isolant diélectrique à l'aide d'une des différentes techniques de métallisation bien connues dans l'art (métallisation sous vide PVD, ou CVD, métallisation chimique etc....). Là encore l'absence de lame d'air entre l'électrode et l'isolant diélectrique est favorable pour éviter des micro-décharges électriques entre les deux éléments.

Les électrodes peuvent être des électrodes à plaques métalliques recouvertes d'un diélectrique disposées en vis-à-vis verticalement ou horizontalement (comme dans WO 99/22920).

Chacune des électrodes peut aussi être constituée d'un ou d'une série de tubes électrodiques.

Ces tubes électrodiques peuvent présenter une section circulaire, rectangulaire ou une autre forme permettant d'appliquer un champ électrostatique sur la matière. Ces tubes électrodiques sont en général constitués d'un diélectrique et d'une partie métallique.

Des tubes électrodiques particulièrement intéressants sont des tubes creux de diélectrique métallisés intérieurement, en particulier des tubes creux de quartz métallisés intérieurement. Des métaux tels que par exemple le cuivre, l'aluminium, l'argent ou l'or peuvent être utilisés pour cette métallisation.

L'obtention de l'effet de mélange, dispersion et/ou homogénéisation de la matière poudreuse jusqu'à un degré déterminé nécessite l'application du champ électrostatique alternatif pendant un temps suffisant. Celui-ci dépend notamment de la nature et du degré d'inhomogénéité de la matière poudreuse, et des autres paramètres du procédé, en particulier l'intensité et la fréquence du champ alternatif, la forme des signaux et la configuration des électrodes. Ce temps suffisant sera facilement déterminé par l'homme du métier par des expériences de routine. En général il est d'au moins 0,1 s, souvent d'au moins 0,5 s, en particulier d'au moins 2 s.

Un mécanisme probable pour expliquer l'effet de mélange, dispersion et/ou homogénéisation du champ électrostatique alternatif sur la matière poudreuse semble être le suivant. Le champ électrostatique alternatif va charger la matière poudreuse puis l'accélérer successivement vers les électrodes raccordés aux deux pôles du générateur haute tension alternative. La matière poudreuse va ainsi occuper au mieux l'espace disponible entre les électrodes. Chaque grain de matière poudreuse recevant des charges électriques de même signe, on observe une répulsion mutuelle des particules qui permet d'expliquer la capacité d'homogénéisation, de dispersion ou de mélange spécifique au procédé. La matière poudreuse va ainsi être parfaitement dispersée et mélangée et les éventuels agglomérats vont être séparés ce qui participe à l'homogénéisation de la poudre.

La matière poudreuse peut être formée d'une seule poudre de nature chimique et granulométrie déterminées, ou de plusieurs poudres de nature chimique et/ou de granulométrie différente(s).

Ces poudres peuvent être notamment
- des poudres fonctionnelles telles que par exemple des poudres cosmétiques, de maquillage, de tensioactif, super-absorbantes, anti-feu ou anti-bactériennes,
- des poudres liantes ou collantes telles que par exemple des poudres thermoplastiques (polypropylène, poléthylène, polyamide, polyester, polycaprolactone, PVC, etc....) et des poudres thermodurcissables (époxy, phénoliques, polyuréthanne ...),
- des poudres colorantes telles que pigments, colorants , noir de carbone ou peintures époxy,
- des poudres minérales telles que par exemple des poudres d'ardoise, graphite, plâtre, ciment, talc, mica
- des poudres pour agroalimentaires telles que sucre, farine, épices, chocolat,
- des poudres pharmaceutiques telles que de principes actifs ou d'excipients.

Ces poudres ont en général une granulométrie de 0,1 à 500 µm, de préférence 0,2 à 100 µm, en particulier 0,5 à 20 µm.

En général, avant la mise en oeuvre du procédé de l'invention, on disperse et saupoudre ces poudres par un dispositif de dispersion/saupoudrage classique, par exemple un dispositif mécanique rotatif (par exemple, cylindre percé de trous et équipé d'un système de brosses) ou un système de lit fluidisé.

D'autres particularités et avantages de la présente invention apparaîtront dans la description qui va suivre, qui sera faite à l'aide des desseins annexés qui illustrent, schématiquement et à titre d'exemple, trois modes d'exécution du procédé de l'invention.

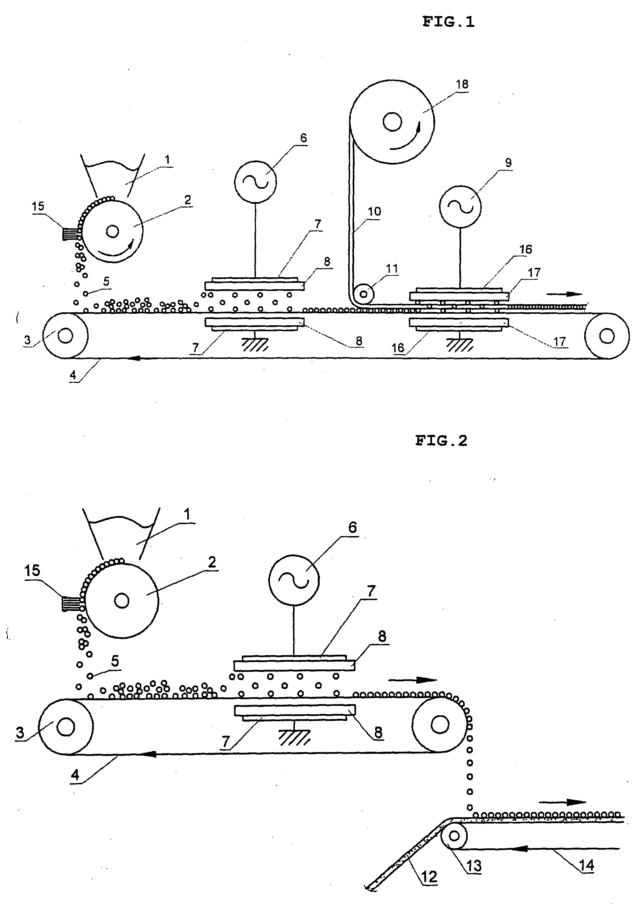

La Figure 1 représente un montage mettant en oeuvre le procédé de l'invention à l'aide d'un dispositif comprenant deux électrodes à plaques horizontales en vis-à-vis, après passage dans un saupoudreur traditionnel et avant utilisation sur la même bande transporteuse de la matière poudreuse disperse et homogène pour imprégner un matériau fibreux.

La Figure 2 représente un montage mettant en oeuvre le procédé de l'invention à l'aide d'un dispositif comprenant deux électrodes à plaques horizontales en vis-à-vis, après passage dans un saupoudreur traditionnel et avant utilisation de la matière poudreuse pour imprégner un matériau fibreux sur une bande située en dessous (pas d'imprégnation recherchée dans ce cas).

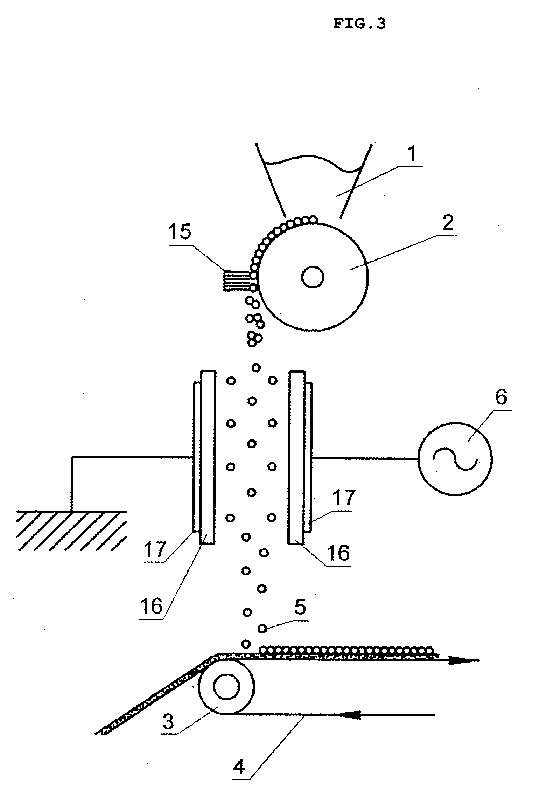

La Figure 3 représente un montage mettant en oeuvre le procédé de l'invention à l'aide d'un dispositif comprenant deux électrodes à plaques verticales en vis-à-vis, après passage dans un saupoudreur traditionnel et avant utilisation de la matière poudreuse disperse et homogène pour imprégner un matériau fibreux.

Dans le montage de la Figure 1 poudre est stockée dans la trémie 1 d'un saupoudreur avant d'être saupoudrée grâce à la rotation d'un cylindre gravé ou garni 2. Une brosse 15 permet de décoller et séparer les grains de poudre qui tombent ensuite par gravité sur le matériau à saupoudrer (ici la bande transporteuse). Le problème de ce type de saupoudreur est que cette brosse et ce cylindre ne garantissent pas une répartition très homogène de la poudre sur le matériau.

Dans ce montage, le procédé d'homogénéisation utilise deux électrodes plates composées chacune d'une partie métallique 7 et d'un isolant diélectrique 8 et raccordées à un générateur haute tension alternative 6. Ce dispositif est utilisé pour disperser et homogénéiser la poudre saupoudrée à la surface d'une bande transporteuse 4 en défilement par le biais d'un dispositif motorisé 3. La poudre ainsi dispersée et homogénéisée à la surface de la bande transporteuse est ensuite recouverte d'un matériau fibreux ou poreux 10 afin d'être imprégnée par un procédé d'imprégnation semblable à celui décrit dans WO 99/22920. Ce procédé comprend le passage du produit à imprégner dans un dispositif comprenant deux électrodes à plaques horizontales 16 recouvertes d'un diélectrique 17 et reliées à un générateur haute tension alternatif 9. Dans ce cas, la poudre se trouve ici sous le matériau à imprégner ce qui ne modifie pas le fonctionnement du procédé.

Dans le montage de la Figure 2 le fonctionnement est identique à la différence que la poudre répartie sur le tapis est transférée sur le dessus d'un matériau 12 en défilement sur une autre bande 14 en mouvement par l'intermédiaire d'un dispositif 13. Dans cette configuration, l'objectif du procédé est de disposer une poudre à la surface d'un matériau sans étape d'homogénéisation postérieure.

Dans le montage de la Figure 3 le fonctionnement est identique à la différence que le dispositif d'homogénéisation par champ électrostatique alternatif est directement placé sous le cylindre débiteur du saupoudreur 2. Dans ce cas, le champ est appliqué par les électrodes 17 recouvertes des plaques diélectriques 16 qui sont disposées verticalement et raccordées au générateur haute tension alternative 6. Dans cette configuration, la poudre peut être directement saupoudrée de façon homogène sur un produit disposé sur la bande transporteuse ou directement sur la bande transporteuse selon l'usage final de la poudre.

## Revendications

1. Procédé de mélange, dispersion et/ou homogénéisation de matière poudreuse en l'absence de réseau fibreux ou filamenteux, **caractérisé en ce qu'**on fait passer la matière poudreuse dans un champ électrostatique alternatif de 0,10 à 20 kV/mm.

2. Procédé selon la revendication 1, **caractérisé en ce que** le champ électrostatique alternatif a une fréquence de 1 à 1000 Hertz.

3. Procédé selon l'une des revendications précédentes, **caractérisé en ce que** la granulométrie de la poudre est 0,1 à 500 µm, de préférence 0,2 à 100 µm.

4. Procédé selon l'une des revendications précédentes, **caractérisé en ce que** la matière poudreuse est un colorant.

5. Procédé selon l'une des revendications précédentes, **caractérisé en ce qu'**on produit le champ électrostatique alternatif par deux électrodes isolées électriquement l'une de l'autre par un diélectrique et reliées aux pôles d'un générateur alternatif.

6. Procédé selon la revendication 5, **caractérisé en ce que** les électrodes sont des plaques métalliques recouvertes d'un diélectrique disposées en vis-à-vis verticalement ou horizontalement.

7. Procédé selon la revendication 5, **caractérisé en ce qu'**au moins une des électrodes comprend un ou une série de tubes de quartz métallisés.

8. Dispositif pour mettre en oeuvre le procédé selon l'une des revendications 1 à 7, **caractérisé en ce qu'**il comprend deux électrodes isolées électriquement l'une de l'autre par un diélectrique et reliées aux pôles d'un générateur alternatif.

9. Dispositif pour mettre en oeuvre le procédé selon l'une des revendications 1 à 7, **caractérisé en ce que** les électrodes sont des plaques métalliques recouvertes d'un diélectrique disposées en vis-à-vis verticalement ou horizontalement.

10. Dispositif pour mettre en oeuvre le procédé selon l'une des revendications 1 à 7, **caractérisé en ce qu'**au moins une des électrodes comprend un ou une série de tubes de quartz métallisés.
